# EUROPÄISCHE PATENTANMELDUNG

(11) **EP 0 949 016 A2**
(43) Veröffentlichungstag der Anmeldung: **13.10.1999**
(21) Anmeldenummer: 99106738.0
(22) Anmeldetag: 03.04.1999
(51) Int. Cl.: B09B 5/00, H01J 9/00

(54) **Verfahren zur Aufarbeitung von gebrauchten Leuchtstofflampen zur Glasrohrrückgewinnung**

(30) Priorität: 07.04.1998 DE 19815486
(71) Anmelder: Kurig, Richard, 51643 Gummersbach (DE)
(72) Erfinder: Kurig, Richard, 51643 Gummersbach (DE)
(74) Vertreter: Patentanwälte Hauck, Graalfs, Wehnert, Döring, Siemons

(57) **Zusammenfassung**

Es wird ein Verfahren zur Aufarbeitung von gebrauchten Leuchtstofflampen zur Glasrohrrückgewinnung beschrieben. Bei einer aufzuarbeitenden Leuchtstofflampe werden die Elektrodenstifte und Endkappen entfernt. Danach wird die Leuchtstofflampe in ein Bad einer Immobilisierungsflüssigkeit eingeführt. Innerhalb des Bades werden die endseitigen Elektrodenglasnippel geöffnet, und die beiden Endelektrodenglaskörper werden vom Glasrohr entfernt. Nach Reinigen und Trocknen des Glasrohres kann dieses zur Herstellung neuer Leuchtstofflampen verwendet werden.

## Beschreibung

Die vorliegende Erfindung betrifft ein Verfahren zur Aufarbeitung von gebrauchten Leuchtstofflampen zur Glasrohrrückgewinnung.

Bei den hier in Rede stehenden Leuchtstofflampen handelt es sich primär um sogenannte Entladungslampen, die im Gegensatz zu Glühlampen oder Halogenlampen aus physikalischen Gründen zur Lichterzeugung Metalldämpfe, beispielsweise Quecksilberdampf, benötigen. Für allgemeine Beleuchtungszwecke werden folgende Entladungslampfen verwendet: Leuchtstofflampen, einschließlich Kompakt-Leuchtstofflampen, Qecksilberdampf-Hochdrucklampen, Metallhalogendampflampen, Natrium-Hochdrucklampen. Derartige Leuchtstofflampen stellen nach den Gesetzen der Bundesrepublik Deutschland Sonderabfall dar und bedürfen einer speziellen Entsorgung.

Aus der EP-A-298 035 ist ein deratiges Entsorgungsverfahren bekannt. Bei diesem Verfahren werden die Lampen in ein eine Flüssigkeit enthaltendes Behältnis eingeführt und innerhalb der Flüssigkeit zerdrückt. Es wird eine Flüssigkeit verwendet, die mit dem Metall bzw. Metalldampf der Lampen chemisch reagiert und diese in unschädliche Verbindungen, insbesondere Sulfide, umwandelt. Der durch die Umsetzung des Metalls bzw. Metalldampfes erhaltene Schlamm wird dann zusammen mit der Flüssigkeit und den Kunststoff- bzw. Glas- und Metallteilen aus dem Behältnis abgezogen und in einer zentralen Anlage separiert.

Bei diesem bekannten Verfahren werden somit die Leuchtstofflampen zerdrückt, so daß Glasbruch anfällt. An eine Rückgewinnung der Glasrohre der Leuchtstofflampen ist nicht gedacht.

Der Erfindung liegt die Aufgabe zugrunde, ein Verfahren zur Aufarbeitung von gebrauchten Leuchtstofflampen zu schaffen, das eine Rückgewinnung der Glasrohre der Leuchtstofflampen ermöglicht.

Diese Aufgabe wird erfindungsgemäß durch ein Verfahren zur Aufarbeitung von gebrauchten Leuchtstofflampen zur Glasrohrrückgewinnung gelöst, das die folgenden Schritte aufweist:
(a) Fixieren einer aufzuarbeitenden Leuchtstofflampe;
(b) Abtrennen der von den Lampenenden nach außen vorstehenden Elektrodenstifte und der Endkappen;
(c) Einführen der Leuchtstofflampe in ein Bad einer Immobilisierungsflüssigkeit für das in der Lampe befindliche Metall bzw. den in der Lampe befindlichen Metalldampf;
(d) Öffnen der endseitigen Elektrodenglasnippel innerhalb der Immobilisierungsflüssigkeit zur Durchführung eines Druckausgleichs und zum Eindringenlassen der Immobilisierungsflüssigkeit in das Glasrohr;
(e) Abtrennen der beiden Endelektrodenglaskörper vom Glasrohr; und
(f) Reinigen des Glasrohres.

Die mit dem erfindungsgemäßen Verfahren aufgearbeiteten bzw. rückgewonnenen Glasrohre können erneut zur Herstellung von Leuchtstofflampen verwendet werden. Bei dem erfindungsgemäßen Verfahren wird so vorgegangen, daß die Glasrohre durch die Aufarbeitung keine Verkürzung erfahren, so daß eine erneute Füllung und Anbringung der Endelektrodenglaskörper mit Startdioden etc. durch Anschmelzen möglich ist.

Dadurch, daß das Glasrohr der Leuchtstofflampe über den oder die endseitigen Elektrodenglasnippel innerhalb einer Flüssigkeit geöffnet wird, kommt es zu einem sanften Druckausgleich zwischen dem unter Unterdruck stehenden Inneren des Glasrohres und der Umgebung, so daß das Glasrohr nicht zerbricht bzw. zerplatzt. Die in das Glasrohr eindringende Immobilisierungsflüssigkeit wandelt das im Glasrohr befindliche Metall bzw. den entsprechenden Metalldampf, beispielsweise Quecksilber oder Quecksilberdampf, sofort in unschädliche Verbindungen, beispielsweise Quecksilbersulfid, um. Es bildet sich dann ein nicht-toxischer Schlamm, der entsprechend entsorgt werden kann.

Nach Durchführung des Druckausgleiches und Immobilisierung werden die beiden Endelektrodenglaskörper vom Glasrohr abgetrennt, beispielsweise abgefräst, und einschließlich der Startdioden und Bleiglaseinsätze entfernt. Dabei wird so vorgegangen, daß die Elektrodenglaskörper unmittelbar am inneren Glasrand abgetrennt werden, so daß sich keine Verkürzung des Glasrohres ergibt. Das Glasrohr wird dann in einem nächsten Schritt gereinigt, insbesondere innen und außen. Dies kann über Hochdruckspülvorgänge mit verschiedener Dosierung durchgeführt werden. Falls erforderlich, kann auch mit Hilfe der Molchtechnik gearbeitet werden.

Nach der vollständigen Reinigung wird das Glasrohr getrocknet, verpackt und zur Herstellung neuer Leuchtstofflampen an die Lampenindustrie weitergegeben.

Der anfallende Leuchtmittelschlamm, welcher beispielsweise HgS enthält, kann endweder zur Hg-Rückgewinnung durch thermische Behandlung zu geeigneten Destillieranlagen verbracht oder auf dafür zugelassenen Deponien abgelagert werden.

Als das Metall bzw. den Metalldampf in unschädliche Verbindungen umwandelnde Flüssigkeit (Immobilisierungsflüssigkeit) wird vorzugsweise Wasser verwendet, dem Zusammensetzungen nach den DE-PS en 39 17 412 oder 40 13 974 zugesetzt wurden.

Die verwendete Immobilisierungsflüssigkeit dient einerseits als Schutzmantel beim Öffnen der Lampenkörper einschließlich Abtrennen der Endelektrodenglaskörper und andererseits zur Umsetzung der im Lampenkörper befindlichen Metalle bzw. Metalldämpfe, die im wesentlichen sofort immobilisiert, beispielsweise zu ungiftigen Metallsulfiden umgesetzt, werden, die sich als Schlamm am Boden des Behältnisses, in dem sich die Immobilisierungsflüssigkeit befindet, absetzen. Natürlich können auch andere Arten von Immobilisierungsflüssigkeiten als vorstehend erwähnt Verwendung finden, wenn diese die vorstehend erwähnte Doppelfunktion als Schutzmantel und zur sofortigen Umsetzung in unschädliche Substanzen erfüllen.

Was die Fixierung der Leuchtstofflampe anbetrifft, so wird diese vorzugsweise in eine Vorrichtung eingehängt, die für den jeweiligen Typ, die jeweilige Länge und Dicke der Leuchtstofflampe ausgebildet ist und die Leuchtstofflampe sicher fixiert, ohne sie zu zerstören. Die nach außen vorstehenden Elektrodenstifte werden vorzugsweise mit einer Schneidvorrichtung abgeschnitten, und die Endkappen werden vorzugsweise vom Lampenkörper abgesaugt und/oder abgedreht. Hierzu findet eine geeignete Saug- und Drehvorrichtung Verwendung. Ggf. wird das am Glasrohr haftende Klebemittel der Endkappen zusätzlich entfernt, beispielsweise über chemische Mittel.

Die so vorbehandelte Leuchtstofflampe wird in eine Wanne abgesenkt, die mit der Immobilisierungsflüssigkeit gefüllt ist. Sobald die Leuchtstofflampe von der Flüssigkeit vollständig bedeckt ist, wird der Lampenkörper vorzugsweise rechts und links durch die Elektrodenglasnippel angebohrt, wobei die Immobilisierungsflüssigkeit durch diese Bohrungen in den Glaskörper eindringt und den Druckausgleich bewirkt. Wesentlich ist, daß bei diesem Schritt sehr sorgfältig vorgegangen wird, um ein langsames Entspannen (Druckausgleich) zu erreichen. Die Elektrodenglasnippel können auch abgeschnitten oder durch Aufschmelzen (beispielsweise mit Hilfe eines Lasers) geöffnet werden. Im nachfolgenden Schritt werden die beiden Endelektrodenglaskörper vorzugsweise mit einem Spezialfräser unmittelbar am inneren Glasrand herausgefräst.

Ein Ausführungsbeispiel des erfindungsgemäßen Verfahrens wird nachfolgend in Verbindung mit der Zeichnung im einzelnen erläutert. Es zeigen:
- Figur 1: eine Seitenansicht einer Leuchtstofflampe im Ausgangszustand für das erfindungsgemäße Verfahren;
- Figur 2: die Leuchtstofflampe der Figur 1 nach dem Entfernen der Elektrodenstifte und nach dem Entfernen der Endkappen;
- Figur 3: eine Stirnansicht der Leuchtstoffröhre der Figuren 1 und 2 nach dem Entfernen der Endkappen;
- Figur 4: die Leuchtstoffröhre mit entfernten Endkappen im in eine mit einer Immobilisierungsflüssigkeit gefüllte Wanne eingetauchten Zustand;
- Figur 5: eine Ansicht ähnlich Figur 4 mit entfernten Endelektrodenglaskörpern; und
- Figur 6: das aufbereitete Glasrohr der Leuchtstoffröhre;

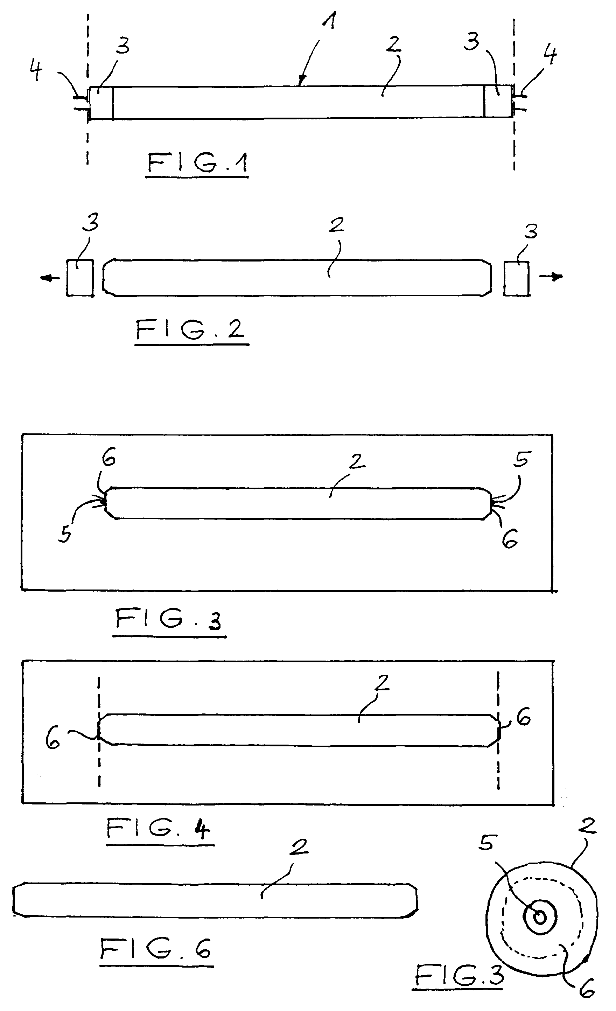

Bei der in den Figuren dargestellten Leuchtstofflampe 1 handelt es sich um eine übliche Quecksilberdampf-Hochdrucklampe. Die Lampe besitzt ein mittleres, mit Quecksilberdampf gefülltes Glasrohr 2, an dessen Enden zwei Endelektrodenglaskörper 6 (in Figur 5 gezeigt) angeschmolzen sind, die in Figur 1 von zwei metallischen Endkappen 3, von denen Elektrodenstifte 4 ausgehen, verdeckt sind. In einem ersten Schritt des Verfahrens werden die beiden Elektrodenstifte 4 an jedem Ende der Leuchtstofflampe abgeschnitten, wie durch die gestrichelten Linien gezeigt. Im zweiten Schritt werden die metallischen Endkappen 3 mittels einer Saug- und Drehvorrichtung vom Glaskörper 2 entfernt. Ggf. wird in einem weiteren Schritt das am Glaskörper 2 haftende Klebemittel für die Endkappen 3 beseitigt.

Nach Entfernung der Endkappen hat die Leuchtstofflampe stirnseitig das in Figur 3 gezeigte Aussehen. In der Mitte der Stirnseite befindet sich ein Elektrodenglasnippel 5.

Wie in Figur 4 gezeigt, wird die Leuchtstofflampe mit entfernten Elektrodenstiften und Endkappen nunmehr in einem mit einer geeigneten Immobilisierungsflüssigkeit 7 gefüllte Wanne eingetaucht. Wenn die Leuchtstofflampe vollständig mit der Immobilisierungsflüssigkeit 7 bedeckt ist, werden die beiden Elektrodenglasnippel 5 an den Enden der Lampe angebohrt, um zwischen dem Inneren der Lampe und der Umgebung einen Druckausgleich durchzuführen und das im Inneren der Lampe abgelagerte Metall bzw. den entsprechenden Metalldampf durch Eindringen der Immobilisierungsflüssigkeit in unschädliche Substanzen, hier Quecksilbersulfid, umzuwandeln.

In einem nachfolgenden Schritt werden, wie in Figur 5 gezeigt, mit einem Spezialfräser die beiden Endelektrodenglaskörper 6 unmittelbar am inneren Glasrand herausgefräst. Hierdurch wird die ursprüngliche Länge des Glaskörpers 2 beibehalten, d.h. eine Verkürzung desselben tritt nicht ein. Der Glaskörper 2 wird dann aus der Wanne herausgeführt, durch mehrere Spülvorgänge innen und außen gereinigt, getrocknet, verpackt und zur Herstellung neuer Leuchtstofflampen an die Lampenindustrie weitergegeben. Der auf dem Boden der Wanne angesammelte Leuchtmittelschlamm, welcher HgS enthält, wird aus der Wanne entfernt und auf dafür zugelassenen Deponien abgelagert.

## Patentansprüche

1. Verfahren zur Aufarbeitung von gebrauchten Leuchtstofflampen zur Glasrohrrückgewinnung mit den folgenden Schritten:
(a) Fixieren einer aufzuarbeitenden Leuchtstofflampe;
(b) Abtrennen der von den Lampenenden nach außen vorstehenden Elektrodenstifte und der Endkappen;
(c) Einführen der Leuchtstofflampe in ein Bad einer Immobilisierungsflüssigkeit für das in der Lampe befindliche Metall bzw. den in der Lampe befindlichen Metalldampf;
(d) Öffnen der endseitigen Elektrodenglasnippel innerhalb der Immobilisierungsflüssigkeit zur Durchführung eines Druckausgleichs und zum Eindringenlassen der Immobilisierungsflüssigkeit in das Glasrohr;
(e) Abtrennen der beiden Endelektrodenglaskörper vom Glasrohr; und
(f) Reinigen des Glasrohres.

2. Verfahren nach Anspruch 1, dadurch gekennzeichnet, daß die Elektrodenstifte abgeschnitten werden.

3. Verfahren nach Anspruch 1 oder 2, dadurch gekennzeichnet, daß die Endkappen vom Lampenkörper abgesaugt und/oder abgedreht werden.

4. Verfahren nach einem der vorangehenden Ansprüche, dadurch gekennzeichnet, daß als Immobilisierungsflüssigkeit eine Quecksilber in Quecksilbersulfid umwandelnde Flüssigkeit verwendet wird.

5. Verfahren nach einem der vorangehenden Ansprüche, dadurch gekennzeichnet, daß die Elektrodennippel aufgeschmolzen werden.

6. Verfahren nach einem der Ansprüche 1 bis 4, dadurch gekennzeichnet, daß die Elektrodennippel aufgebohrt werden.

7. Verfahren nach einem der vorangehenden Ansprüche, dadurch gekennzeichnet, daß die Endelektrodenglaskörper vom Glasrohr abgefräst werden.
